# EUROPEAN PATENT APPLICATION

(11) **EP 1 811 796 A1**
(43) Date of publication of application: **25.07.2007**
(21) Application number: 05799879.1
(22) Date of filing: 07.11.2005
(51) Int. Cl.: H04Q 7/34, G08G 1/13, H04Q 7/38

(54) **POSITION DISPLAY SYSTEM**

(30) Priority: 09.11.2004 JP 2004325415
(71) Applicant: SEGA CORPORATION, Ohta-ku, Tokyo 144-0043 (JP)
(72) Inventor: YAMASHITA, Kenya, SEGA CORPORATION, Tokyo 144-0043 (JP); OKUNOKI, Yutaka, SEGA CORPORATION, Tokyo 144-0043 (JP)
(74) Representative: Hofer, Dorothea
(86) International application number: PCT/JP2005/020359
(87) International publication number: WO 2006/051750

(57) **Abstract**

In a position display system, position-related information related with real positions of respective information processing terminals are obtained; the position-related information is transmitted to a server; real positions of the respective information processing terminals based on the position-related information are stored; past real positions satisfying the condition of being before the present time by a prescribed period of time and more are generated as display positions for the respective information processing terminals; the display positions of the respective information processing terminals are obtained from the server; and the display positions of said a plurality of information processing terminals are displayed on the screens of the respective information processing terminals. Real positions at which respective users have been actually present but which are not the present real positions of the users and are at times before a prescribed period of time and more are displayed. Thus, the privacy of the users is protected while positions of the mobile bodies can be displayed natural.

## Description

### TECHNICAL FIELD

The present invention relates to a position display system for displaying positions of a plurality of information processing terminals having a position receiving means on the screens of the respective information processing terminals.

### BACKGROUND ART

The navigation system which displays positions of mobile bodies on a map image with icons, etc., based on status information of the mobile bodies to thereby recognize accurately and quickly positions of the respective mobile bodies has been conventionally known. Status information containing position information of the mobile bodies are exchanged by communication mutually among the plural mobile bodies to display positions of the mobile bodies with identifiable icons, etc. on the map image, based on the status data received from the other mobile bodies (see Patent Reference 1).

It is convenient but often with the risk of making insufficient the protection of privacy of the users of the system that positions of mobile bodies can be thus recognized accurately. For the protecting of the users' privacies are known conventional art that a user sets a region where he does not want his positions to be known, whereby in the region the position information is not transmitted from the information terminal (see Patent References 2 and 4), and the conventional art that the precision of the position information of a mobile body is adjusted to be below a prescribed precision to thereby make accurate positions of the mobile body unknown (see Patent Reference 3).
Patent Reference 1: Specification of Japanese Patent Application Unexamined Publication No. 2003-139546
Patent Reference 2: Specification of Japanese Patent Application Unexamined Publication No. 2003-143633
Patent Reference 3: Specification of Japanese Patent Application Unexamined Publication No. 2003-161771
Patent Reference 4: Specification of Japanese Patent Application Unexamined Publication No. 2003-284124

### DISCLOSURE OF THE INVENTION

### PROBLEMS TO BE SOLVED BY THE INVENTION

However, the conventional art that position information is not transmitted in a certain region can protect the privacy of the user, while the position of the user in the certain region is completely erased. This causes a problem in games, etc. using the position display system that unnaturally the position of the user is invisible to the participants in the games, etc. When the position of the mobile body is completely erased, a number of mobile bodies displayed on the screen is decreased, which causes a problem of misunderstanding that the participants are few.

In the conventional art that the position precision of a mobile body is set below a prescribed precision, when the position precision is made sufficiently low for the protection of the privacy, the problem that unnaturally the mobile body passes other than roads, etc. is caused.

An object of the present invention is to provide a position display system which can protect the privacy of a user while displaying positions of the mobile body natural.

### MEANS FOR SOLVING THE PROBLEMS

The position display system according to one aspect of the present invention, comprises: position-related information obtaining means for obtaining position-related information related with real positions of the respective information processing terminals; position-related information transmitting means for transmitting the position-related information to a server; memory means of the server for storing real positions of the respective information processing terminals, based on the position-related information; display position generating means for generating as display positions, for the respective information processing terminal, past real positions which satisfy the condition of being before the present time by a prescribed period of time and more, and being apart from present real positions by a prescribed distance and more; display position obtaining means for obtaining the display position of the respective information processing terminals from the server; and position display means for displaying the display positions of said plural information processing terminals on the screens of the respective information processing terminals.

The above-described display position generating means may generate as display positions, for the respective information processing terminals, past real positions satisfying the condition of being before the present time by a prescribed period of time and more.

It is possible that the above-described display position generating means generates as display positions, for the respective information processing terminals, past real positions satisfying the condition of being apart from the present real positions by a prescribed distance and more.

It is possible that the above-described display position generating means generates as display positions those of past real positions satisfying said condition, which are most recent.

It is possible that the above-described display position means generates as display positions those of past real positions satisfying said condition, which are nearest to the present real positions.

In the above-described position display system, it is possible that the position displaying means displays on the screen of the respective information processing terminal the present real position of its own information processing terminal and said display positions on the other information processing terminals.

The server of the position display system according to one aspect of the present invention, comprises: memory means for storing real positions of the respective information processing terminals based on position-related information transmitted from the respective information processing terminals; and display position generation means for generating as display positions, for the respective information processing terminals, past real positions which satisfy the condition of being before the present time by a prescribed period of time and more, and being apart from present real positions by a prescribed distance and more.

It is possible that the above-described display position generating means generate as display positions, for the respective information processing terminals, past real positions satisfying the above condition of being apart from the present time by a prescribed period of time and more.

It is possible that the above-described display position generating means generates as display positions, for the respective information processing terminals, past real positions satisfying the condition of being apart from the present real positions by a prescribed distance and more.

It is possible that the above-described display position generating means generates as display positions those of past real positions satisfying said condition, which are most recent.

It is possible that the above-described display position generating means generates as display positions those of past real positions satisfying said condition, which are most recent to the present real positions.

The information processing terminal of the above-described position display system, comprises: position-related information obtaining means for obtaining position-related information related with their own real positions; position-related information transmitting means for transmitting to a server; display position obtaining means for obtaining display positions of the respective information processing terminals from the server; and position display means for displaying the display positions of said a plurality of information processing terminals on the screens.
It is possible that the above-described position displaying means displays the present real positions for their own information processing terminals and said display positions for the other information processing terminals.

The computer program according to one aspect of the present invention, for causing a server of a position display system for displaying positions of a plurality of information processing terminals on the screens of the respective information processing terminals to function as: memory means for storing real positions of the respective information processing terminals based on position-related information transmitted from the respective information processing terminals; and display position generating means for generating as display positions, for the respective information processing terminals, past real positions which satisfy the condition of being before the present time by a prescribed period of time and more, and being apart from the present real positions by a prescribed distance and more.

It is possible that the above-described display position generating means generates as display positions past real positions satisfying said condition of being before the present time by a prescribed period of time and more.

It is possible that the above-described display position generating means generates as display positions past real positions satisfying the condition of being apart from the present real positions by a prescribed distance and more.

It is possible that the above-described display position generating means generates as display positions those of past real positions satisfying said condition, which are most recent.

It is possible that the above-described display position generating means generates as display positions those of real positions satisfying said condition, which are nearest to the present real positions.

The computer program according to one aspect of the present invention, for causing an information processing terminal of a position display system for displaying positions of a plurality of information processing terminals on the screens of the respective information processing terminals to function as: position-related information obtaining means for obtaining position-related information related with their own real positions; position-related information transmitting means for transmitting the position-related information to a server; display position obtaining means for obtaining display positions of the respective information processing terminals from the server; and position display means for displaying the display positions of said a plurality of information processing terminals on the screens.

In the above-described computer program, it is possible that said position display means displays the present real positions for their own information processing terminals and said display positions for the other information processing terminals.

### EFFECT OF THE INVENTION

According to the present invention, position-related information related with real positions of respective information processing terminals are obtained; the position-related information is transmitted to a server; real positions of the respective information processing terminals based on the position-related information are stored; past real positions satisfying the condition of being before the present time by a prescribed period of time and more are generated as display positions for the respective information processing terminals; the display positions of the respective information processing terminals are obtained from the server; and the display positions of said a plurality of information processing terminals are displayed on the screens of the respective information processing terminals, whereby the privacy of the users can be protected while positions of the mobile bodies are displayed natural.

### BRIEF DESCRIPTION OF THE DRAWINGS

FIG. 1 is a view illustrating a structure of the position display system according to one embodiment of the present invention.
FIG. 2 is a view illustrating a structure of the mobile phone of the position display system according to the embodiment of the present invention.
FIG. 3 is a view illustrating one example of a certain area where a game using the position display system according to the embodiment of the present invention is played.
FIG. 4 is a view illustrating one example of images of the game on the information processing terminal, which uses the position display system according to the embodiment of the present invention.
FIG. 5 is the flow chart of a first position display processing by the position display system according to the embodiment of the present invention.
FIG. 6 is the flow chart of a third position display processing by the position display system according to the embodiment of the present invention.
FIG. 7 is an explanatory view (Part 1) of the third position display processing by the position display system according to the embodiment of the present invention.
FIG. 8 is an explanatory view (Part 2) of the third position display processing by the position display system according to the embodiment of the present invention.
FIG. 9 is an explanatory view (Part 3) of the third position display processing by the position display system according to the embodiment of the present invention.
FIG. 10 is an explanatory view (Part 4) of the third position display processing by the position display system according to the embodiment of the present invention.
FIG. 11 is an explanatory view (Part 5) of the third position display processing by the position display system according to the embodiment of the present invention.
FIG. 12 is an explanatory view (Part 6) of the third position display processing by the position display system according to the embodiment of the present invention.
FIG. 13 is an explanatory view (Part 7) of the third position display processing by the position display system according to the embodiment of the present invention.
FIG. 14 is an explanatory view (Part 8) of the third position display processing by the position display system according to the embodiment of the present invention.
FIG. 15 is an explanatory view (Part 9) of the third position display processing by the position display system according to the embodiment of the present invention.

### REFERENCE NUMBERS

- 10: ... Mobile phone (information processing terminal) with a GPS receiver
- 101: ... Control unit (CPU)
- 102: ... Memory unit (memory)
- 103: ... Screen (liquid crystal display)
- 104: ... Operational input unit (ten keys)
- 105: ... Position information obtaining unit (GPS)
- 106: ... Antenna
- 107: ... Transmitting and receiving unit (wireless communication circuit)
- 108: ... Sound processing unit (DPS)
- 109: ... Sound input unit (microphone)
- 110: ... Sound output unit (speaker)
- 12: ... Car with a navigator (information processing terminal) with a GPS receiver
- 20: ... Mobile phone company server
- 201: ... Control means
- 202: ... Memory means
- 30: ... Position information server
- 301: ... Control means
- 302: ... Memory means
- 40: ... Internet
- 50: ... Artificial satellite

### BEST MODE FOR CARRYING OUT THE INVENTION

### [One Embodiment]

The position display system according to one embodiment of the present invention will be explained with reference to the drawings.

The position display system according to the present embodiment is a system for displaying the present location of a user having an information processing terminal including a position receiving means, such as a GPS receiver, etc., on the screen of information processing terminals of other users. On the screens of the information processing terminals of the respective users, the present positions of the users including themselves are displayed. The information processing terminals can be mobile phones, PHS, PDA, mobile game machines, etc., which can be carried on or navigation systems, etc., which are mounted on cars, ships, etc.

### (Summary of the Position Display System)

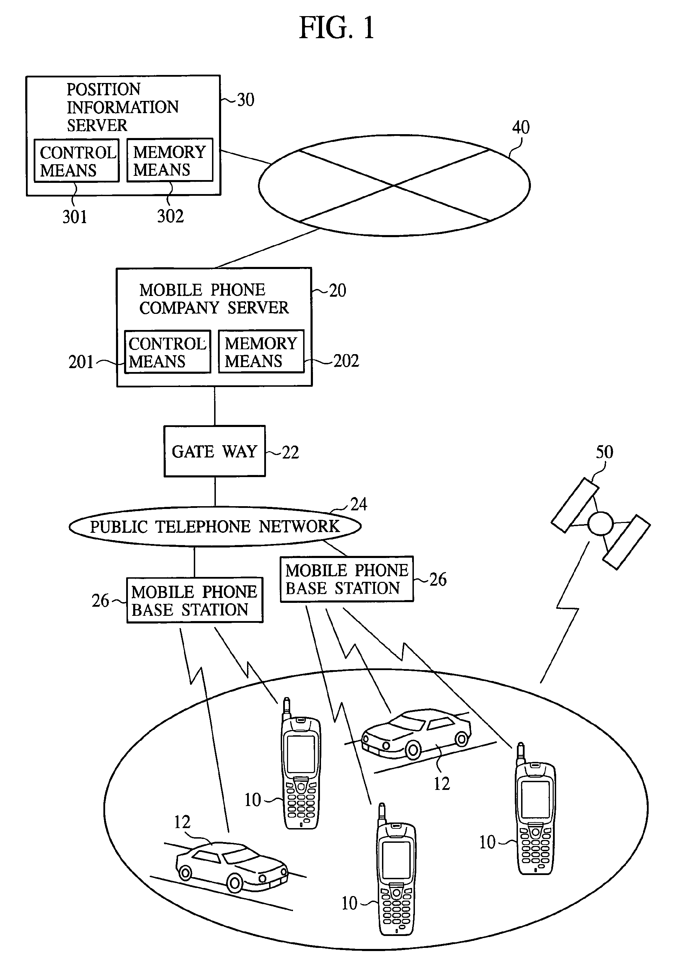

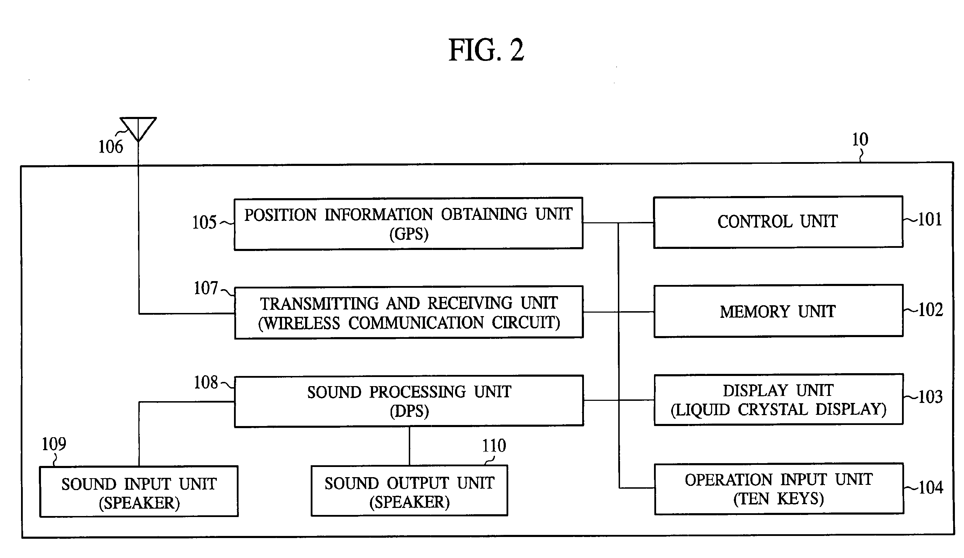

The structure of the position display system according to the present embodiment will be explained with reference to FIGs. 1 and 2.

It is assumed that, as illustrated in FIG. 1, users are moving, carrying on mobile phones (information processing terminals) 10 with GPS receivers or in cars 12 with navigation systems (information processing terminals) (not illustrated) with GPS receivers. Users may carry information processing terminals, such as PHS, PDA, portable games, in place of the mobile phones 10 having the GPS function. Users may be moving in cars 12 without navigation systems as long as the users are carrying such information processing terminals.

The information processing terminals, such as the mobile phones 10, the navigation systems, etc., communicate with some of the mobile phone base stations 26 and are connected to the public telephone network 24. The information processing terminals, such as the mobile phones 10, etc., connected to the public telephone network 24 are connected to the mobile phone company server 20 via a gateway 22.

The mobile phone company server 20 which is computer includes a control means 201, and a memory means 202 for storing programs and various data, and is connected to an internet 40. The information processing terminals, such as the mobile phones 10, etc., can be connected also to the internet 40 via the mobile phone company server 20.

As illustrated in FIG. 2, the mobile phone 10 which is a computer includes a control means (CPU) 101 for the general control, and a memory unit (memory) 102 for storing programs and various data. The mobile phone 10 includes a screen (liquid crystal display) 103 for displaying various kinds of information, and an operational input unit (ten keys) 104 for inputting operation signals. The mobile phone 10 also includes a sound processing unit (DPS) 108 for processing input/output of sounds, and a sound input unit (microphone) 109 and a sound output unit (speaker) 110 are connected to the sound processing unit 108. The mobile phone 10 further includes a transmitting and receiving unit (wireless communication circuit) 107 for transmitting and receiving signals, and an antenna 106 is connected to the transmitting and receiving unit 107.

The mobile phone 10 further includes a position information obtaining unit (GPS) 105 for obtaining the present position information. The position information obtaining unit 105 receives signals from an artificial satellite 50 to grasp the present accurate positions. The present position information of the mobile phone 10 can be obtained, relying on, in place of GPS, position information of the identified mobile phone base station 26 which the mobile phone 10 is presently connected to.

The position information server 30 which is a computer functioning as a data administration server for administering data of position information, etc. is provided. The position information server 30 is connected to the internet 40. The position information server 30 includes a control means 301, and a memory means 302 for storing programs and various kinds of data.

The position information of the mobile phones 10 and the navigation system mounted on the cars 12 thus obtained as described above is stored in the memory means 302 of the position information server 30. The control means 301 of the position information server 30 makes prescribed processing on the position information which has been transmitted from the mobile phones 10 of the respective users and stored in the memory means 302 and gives display positions of the mobile phones 10 of the respective users. The prescribed processing will be described alter.

A case in which the position display system according to the present embodiment is used to play a game, e.g., a many users participating game, a treasure hunting game, etc. will be explained.

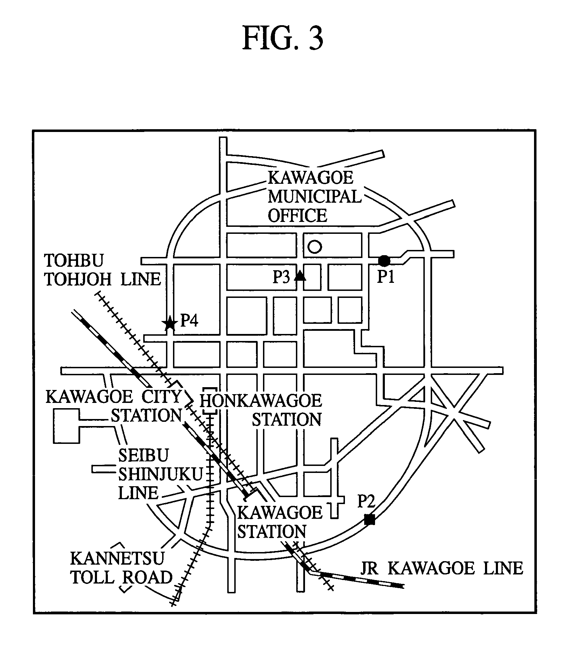

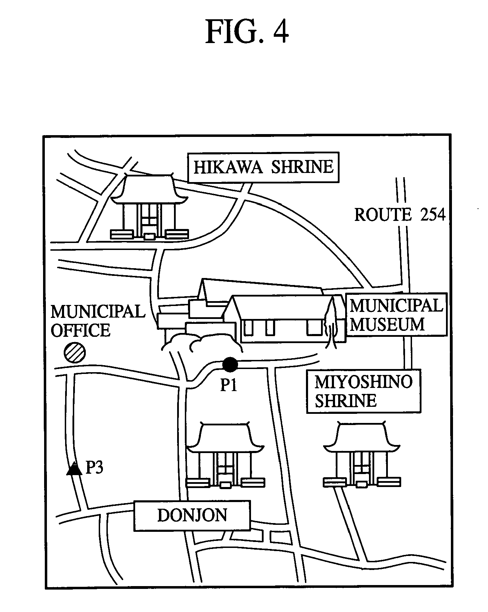

It is assumed that users participating in a game have gathered in a certain region, e.g., Kawagoe City illustrated in FIG. 3. In FIG. 3, the present positions of User 1, User 2, User 3, ... are indicated by P1, P2, P3, .... On the screen of the mobile phone of User 1, as illustrated in FIG. 4, the vicinity of the present position P1 of User 1 is displayed. On the display, with the present position P1 of User 1 at the center, the present positions P2, P3, ... of the other User 2, User 3, ... are displayed. Similarly, on the respective screens of the mobile phones 10 of the other User 2, User 3, ..., the present position of its own mobile phone at the center and the present positions of the other users are displayed.

### (Position Display Processing)

In the conventional position display system, the present positions of User 1, User 2, User 3, ... are accurately displayed, but accurately knowing the present positions of the respective users is convenient but has the risk that the privacy protection of the respective users could not be sufficient.

Here, in the present embodiment, to protect the privacy of the users while displaying positions of the mobile bodies natural, the following processing for hiding the present real positions (actual positions) is made.

This processing includes position transmission processing for transmitting to the server positions a plurality of information processing terminals have received; display position generation processing for generating display positions for the respective information processing terminals; and position display processing for displaying the display positions of the respective information processing terminals on the screens of the respective information processing terminals. The position transmission processing is made by, e.g., the control means (control units 101) of the information processing terminals of the mobile phones 10, etc. Actual positions (real positions) of the information processing terminals of the mobile phones 10, etc. transmitted to the server are stored in the memory means of the position information server 302. As required, the present real positions or past real positions are read from the memory means 302 of the position information server 30 to make the position display processing which will be described alter. The display position generating processing is made by, e.g., the control means 301 of the position information server 30. The position display processing is made by, e.g., the control means 101 of the information processing terminals of the mobile phones 10, etc. receiving data of display positions transmitted from the position information server 30.

First position display processing is for not displaying the present positions of the respective users as they are but generating as display positions real positions of the respective users at times before a certain period of time and more and displaying the real positions as the display positions of the mobile phones 10 of the respective users on the screens 103 of the mobile phones 1 of the respective users. Real positions at which where the respective users have been actually present but do not presently locate and which are positions at a time before a certain period of time, e.g., 10 minutes are displayed on the screens 103.

Second position display processing is for not displaying the present positions of the respective users as they are but generating, as display positions, past real positions of the respective users, which are apart from the present real positions by a certain distance and more and displaying the display positions of the information processing terminals of the respective users on the screens 103 of the mobile phones 10 of the respective users. Real positions at which the respective users have been present and which are past real positions which are apart from the present real positions of the respective users by a certain distance and more, e.g., 90 m and more are displayed on the screens 103.

Third position display processing is for not displaying the present positions of the respective users as they are but generating as display positions the most recent past real positions of the respective users, which are apart from the present real positions by a certain distance and more and displaying the display positions of the information processing terminals of the respective users on the screens 103 of the mobile phones of the respective users. Real positions at which the respective users have been actually present and are the most recent ones of past real positions which are apart from the present real positions of the users by a certain distance and more, e.g., above 80 m are displayed on the screens 103.

Fourth screening processing is for not displaying the present positions of the respective users as they are but generating as display positions real positions of the respective users, which are at times before a certain period of time and more, and are apart from the real positions by a certain distance and more and displaying the display positions of the information processing terminals of the respective users on the screens 103 of the mobile phones 10 of the respective users. Real positions at which the respective users have been actually present and which are at times before a certain period of time and more, e.g., 10 minutes and more, and are apart from the present real positions by a certain distance and more, e.g., above 90 m including 90 m are displayed on the screens 103.

Fifth position display processing is for not displaying the present positions of the respective users but for generating as display positions real positions of the respective users, which are at times before a certain period of time and are apart from the present real positions by a certain distance and more and nearest to the present real positions and displaying the display positions of the information processing terminals of the respective users on the screens 103 of the mobile phones 10 of the respective users. Real positions at which the respective users have been actually present and which are at times before a certain period of time and more, e.g., 10 minutes and more and which are nearest to the present real positions of past real positions which are apart from the present real positions by a certain distance and more, e.g., above 90 m including 90 m are displayed on the screens 103.

Sixth position display processing is for not displaying the present real positions of the respective users as they are but for generating as display positions the most recent ones of real positions which are at times before a certain period of time and more and are apart from the present real positions by a certain distance and more, and displaying the display positions on the screens 103 of the mobile phones 10 of the respective users. Real positions at which the respective users have been present and which are the most recent ones of real positions which are at times before a certain period of time and more, e.g., 10 minutes and more and are apart from the present real positions by a prescribed distance and more, e.g., above 90 m including 90m are displayed on the screens 103.

### (The First Position Display Processing)

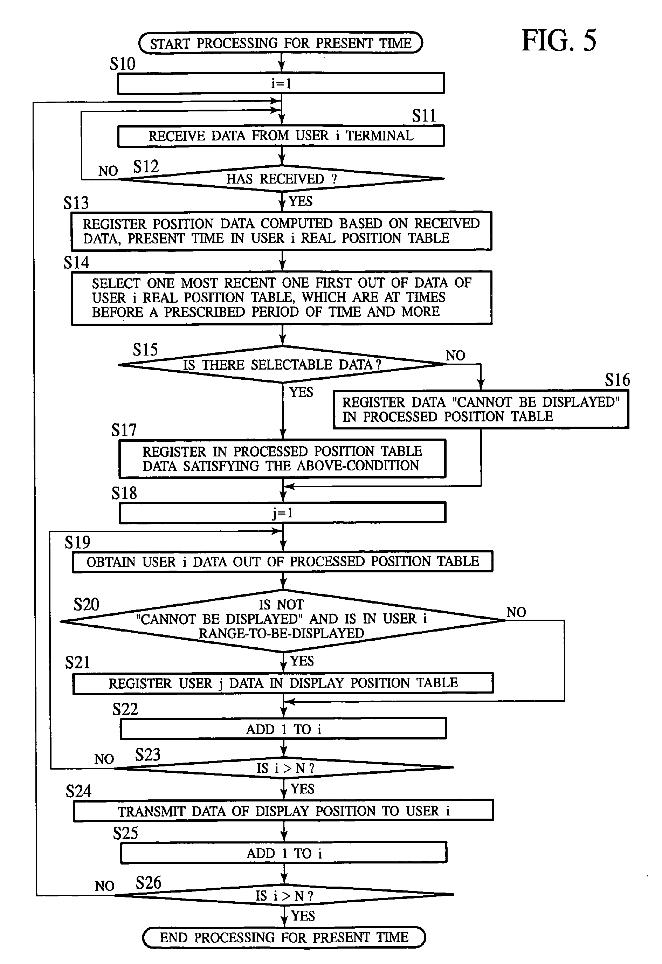

The first position display processing by the position display system according to the present embodiment will be detailed with reference to the flow chart of FIG. 5. In the first position display processing, real positions of respective users, which are at times before a certain period of time and more are generated as display positions.

A number of the users is N, and the N-users are User 1, User 2, User 3, ..., User i, ..., User N. The memory means 302 of the position information server 30 stores for each user a real position table of times and positions (real positions) where the user has been present at the respective times, a processed position table of the respective times and positions subjected to the processing (processed positions) corresponding to the times, and a display position table of the respective times and positions to be displayed where the user is regarded to have been present at the times (display positions).

The position display processing is started with the first counter i set at "1" (Step S10).

Data at the present time is received from the information processing terminal of User i (Step S11). It is judged whether or not the data has been correctly received (Step S12), and when not received, Step S11 follows, and the position data is received again.

When the data has been received correctly, position data computed based on the received data, and the present time are recorded as the present real position in the real position table of User i (Step S13).

Then, real positions in the real position table of User i, which are at times before a certain period of time and more, e.g., 10 minutes and more are checked the most recent one first to select one of them (Step S14).

Then, it is judged whether or not there is selectable data (Step S15), and when there is no selectable data for the reason that, e.g., no real positions at times before 10 minutes and more are present or for other reasons, data indicating "cannot be displayed", e.g., "-1" is recorded in the processed position column of the processed position table of User i (Step S16), and the processing of Step S18 follows.

When there is selectable data, the data is recorded in the processed position column of the processed position table of User i (Step S17).

Next, the processing is continued with the second counter set at "1" (Step S18).

First, processed position data of User j at the present time is obtained from the processed position table (Step S19).

Then, it is judged whether or not the obtained processed position data of User j is not data "cannot be displayed" and furthermore is within a range-to-be-displayed of User i (Step S20). When the data is with the range-to-be-displayed of User i, the data of the processed position is recorded in the display position column of the display position table (Step S21). When the data is "cannot be displayed" or out of the range-to-be-displayed of User i, Step S21 is skipped.

Then, "1" is added to the second counter j (Step S22), and until the second counter j reaches the number N of the users (Step S23), the processing of Step S19 to Step S22 is repeated.

When the second counter j reaches the number N of the users (Step S23), the data of the display position table is transmitted to the information processing terminal of User j (Step S24).

Then, "1" is added to the first counter i (Step S25), and until the first counter i reached the number N of the users (Step S26), the processing of Step S11 to Step S25 is repeated.

The above-described processing is made, whereby the information processing terminals of the N's users, User 1, User 2, User 3, ..., User i, ..., User N respectively obtain the data of the display position table to be displayed on the respective screens. Then, based on the data of the display position table, the positions of the N's users, User 1, User 2, User 3, ..., User i, ..., User N are displayed on the screen of the information processing terminal of the respective user i.

In the above description, although the processed position table is provided, the present processed positions alone may be recorded, and it is not necessary to store the past data in tables.

In the above description, although the display position table is provided, a computed display position is transmitted to the information terminals each time the computed display position is given, and the display position table may not be provided.

### (The Third Position Display Processing)

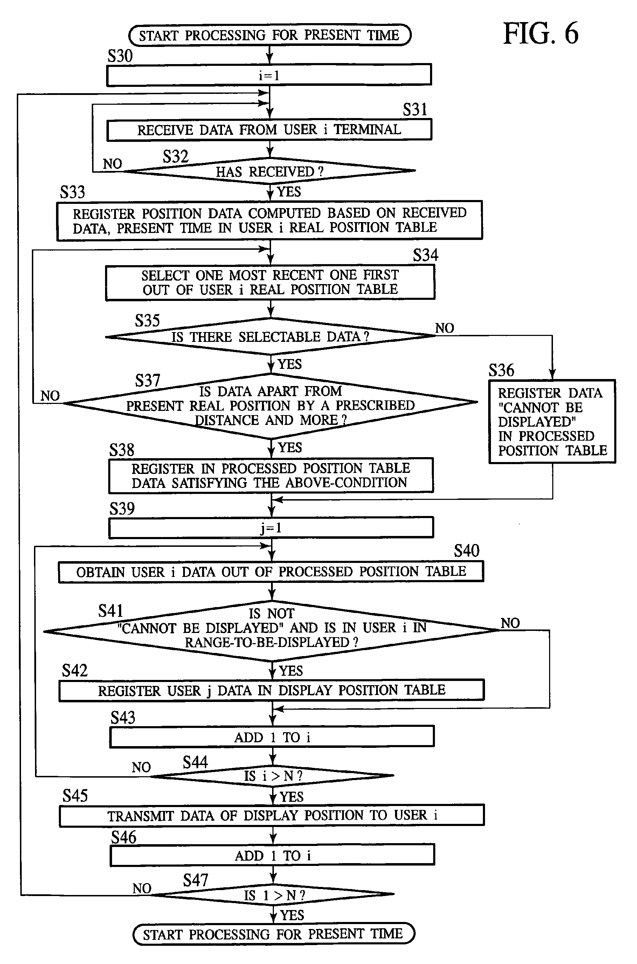

The third position display processing by the position display system according to the present embodiment will be explained with reference to FIG. 6. In the third position display processing, For respective users, most recent ones of past real positions which are apart from the present real positions by a prescribed distance and more are generated.

A number of users is N, and the N's users are User 1, User 2, User 3, ..., User i, ..., User N. A number of the users is N, and the N-users are User 1, User 2, User 3, ..., User i, ..., User N. The memory means 302 of the position information server 30 stores for each user a real position table of times and positions (real positions) where the user has been present at the respective times, a processed position table of the respective times and positions subjected to the processing (processed positions) corresponding to the times, and a display position table of the respective times and positions to be displayed where the user is regarded to have been present at the times (display positions).

The position display processing is started with the first counter i set at "1" (Step S30).

Data at the present time is received from the information processing terminal of User i (Step S31). It is judged whether or not the data has been correctly received (Step S32), and when not received, Step S31 follows, and the position data is received again.

When the data has been received correctly, position data computed based on the received data, and the present time are recorded as the present real position in the real position table of User i (Step S33).

Then, the real positions of the real posiiton table of User i are checked the most recent one first to select one of the real positions (Step S34).

Then, it is judged whether or not there is selectable data (Step S35), and when there is not selectable data for the reason that, e.g., no real positions at times before 10 minutes and more are present or for other reasons, data indicating "cannot be displayed", e.g., "-1" is recorded in the processed position column of the processed position table of User i (Step S36), and the processing of Step S19 follows.

When there is selectable data, it is judged whether or not the data is apart from the present real position by a prescribed distance and more, e.g., 90 m and more (Step S37). Unless the data is apart from by 90 m and more, Step S34 follows, and then the real positions are checked for the new most recent data (Step S34). Until the real position which is apart from the present real position by the prescribed distance and more, e.g., 90 m and more is found, the processing of Step S34, Step S35 and Step S36 is repeated.

When a real position which is apart from the present real position by a prescribed distance and more, e.g., 90 m and more, the data is registered in the processed position column of the processed position table of User i (Step S38).

Then, the second counter j is set at "1", and the processing is continued (Step S39).

First, the data of the processed position at the present time of User j is obtained from the processed position table (Step S40).

Then, it is judged whether or not the obtained processed position data of User j is not data "cannot be displayed" and furthermore is within a range-to-be-displayed of User i (Step S41). When the data is with the range-to-be-displayed of User i, the data of the processed position is recorded in the display position column of the display position table (Step S42). When the data is "cannot be displayed" or out of the range-to-be-displayed of User i, Step S42 is skipped.

Then, "1" is added to the second counter j (Step S43), and until the second counter j reaches the number N of the users (Step S44), the processing of Step S40 to Step S43 is repeated.

When the second counter j reaches the number N of the users (Step S44), the data of the display position table is transmitted to the information processing terminal of User j (Step S45).

Then, "1" is added to the first counter i (Step S46), and until the first counter i reached the number N of the users (Step S47), the processing of Step S31 to Step S46 is repeated.

The above-described processing is made, whereby the information processing terminals of the N's users, User 1, User 2, User 3, ..., User i, ..., User N respectively obtain the data of the display position table to be displayed o the respective screens. Then, based on the data of the display position table, the positions of the N's users, User 1, User 2, User 3, ..., User i, ..., User N are displayed on the screen of the information processing terminal of the respective user i.

### (Examples of the Third Position Display Processing)

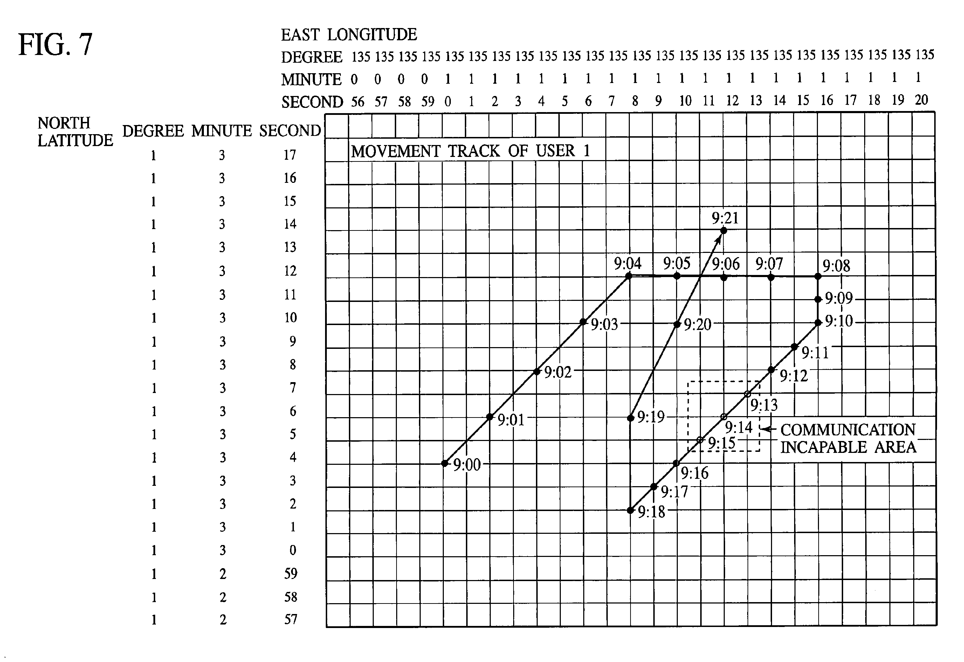

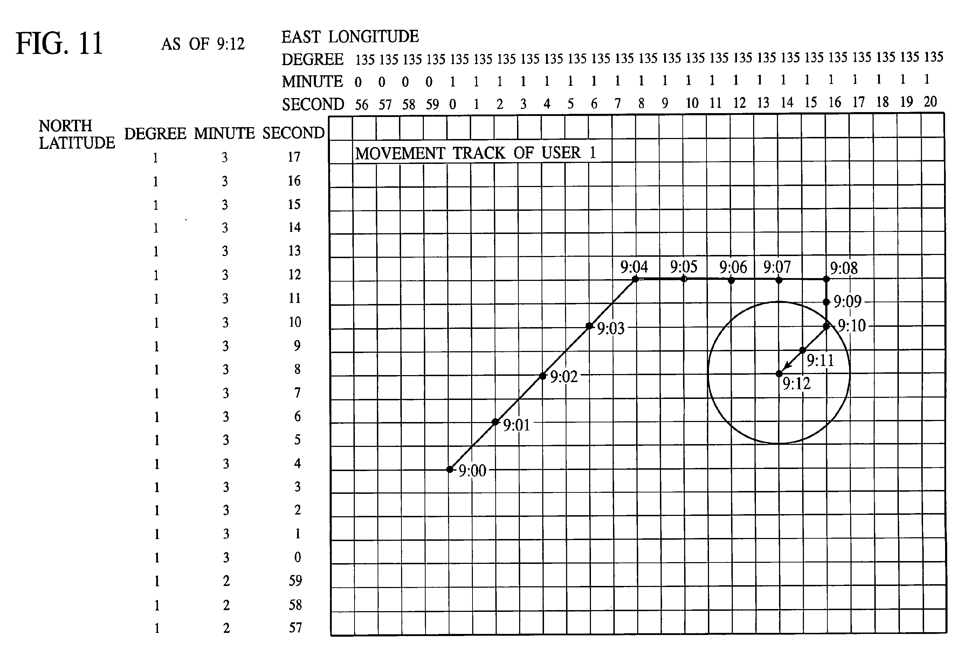

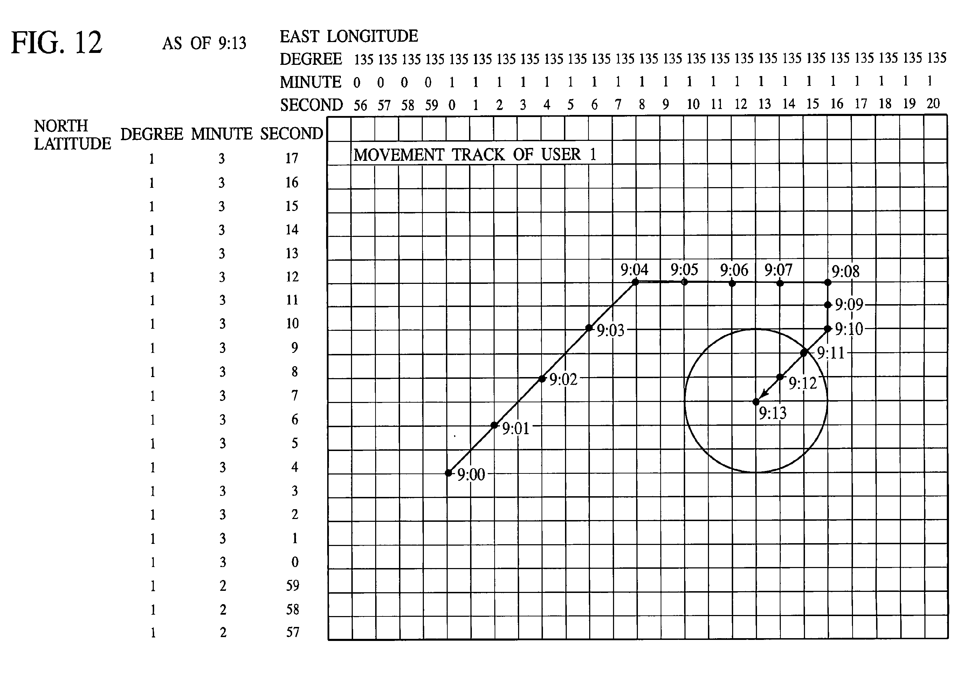

Examples of the third position display processing by the position display system according to the present embodiment will be explained with reference to FIGs. 7 to 14. In the third position display processing, for respective users, most recent past positions which are a part from a prescribed distance and more from the present positions are generated as display positions.

FIG. 7 illustrates a movement trace along which User 1 moved from 9:00 when the position screen started up to 9:21. However, between 9:13 to 9:15, no positions were screened due to communication incapability. In vicinities near the equator, whose latitudes are low, 1 second of the latitudes and the longitudes is about 30 m. In FIG. 7, 1 grid is an about 30 m-square. At high latitudes, 1 second of the longitudes is smaller than about 30 m. For the convenience of explanation here, it is assumed in FIG. 7 that User 1 moves near low latitudes, where 1 grid is an about 30 m-square.

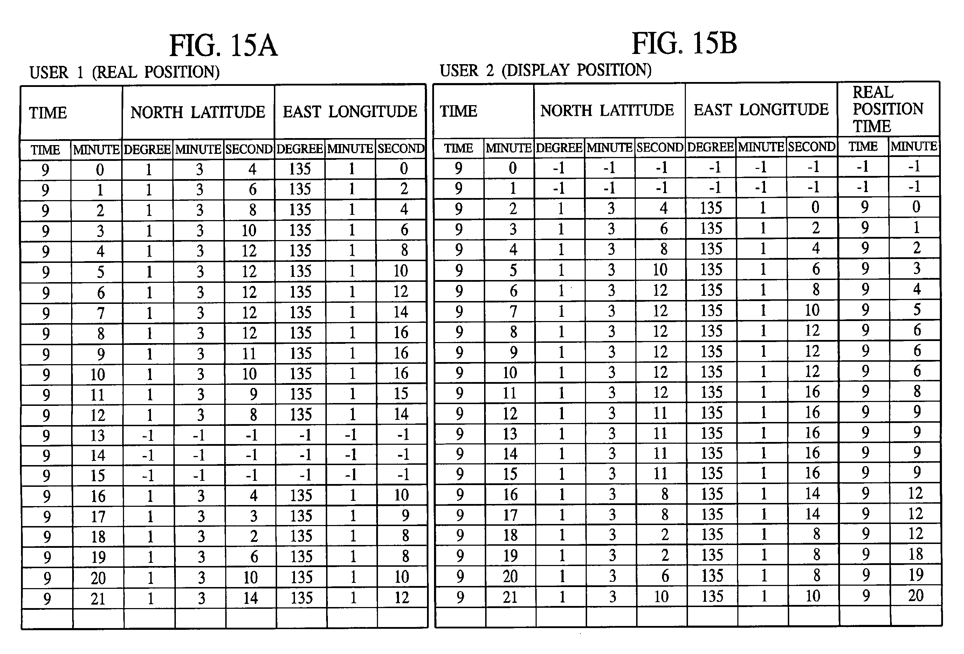

FIG. 15A is the real position table of User 1 between 8:13 to 9:21. Times are indicated in the left column, the latitudes are indicated in the middle column, and the longitudes are indicated in the right column. The real positions at the respective times indicated in the left column are indicated by the latitudes in the middle column and the longitudes in the right column. For example, the real position at 9:00 is at 1° 3' 4" NL and 135° 1' 0" EL, and for the times past 9:01, the real positions are indicated similarly by the latitudes and the longitudes. In the latitude column and the longitude column between 9:13 and 9:15, during which the positions could not be obtained, "-1" which indicates that no positions could be obtained is indicated.

FIG. 15B is the display position table of User 1 between 9:00 and 9:21. Times are indicated in the left column, the latitudes are indicated in the middle column, and the longitudes are indicated in the right column. The display positions at the respective times indicated in the left column are indicated by the latitudes in the middle column and the longitudes in the right column. When no display position is given, "-1" is recorded.

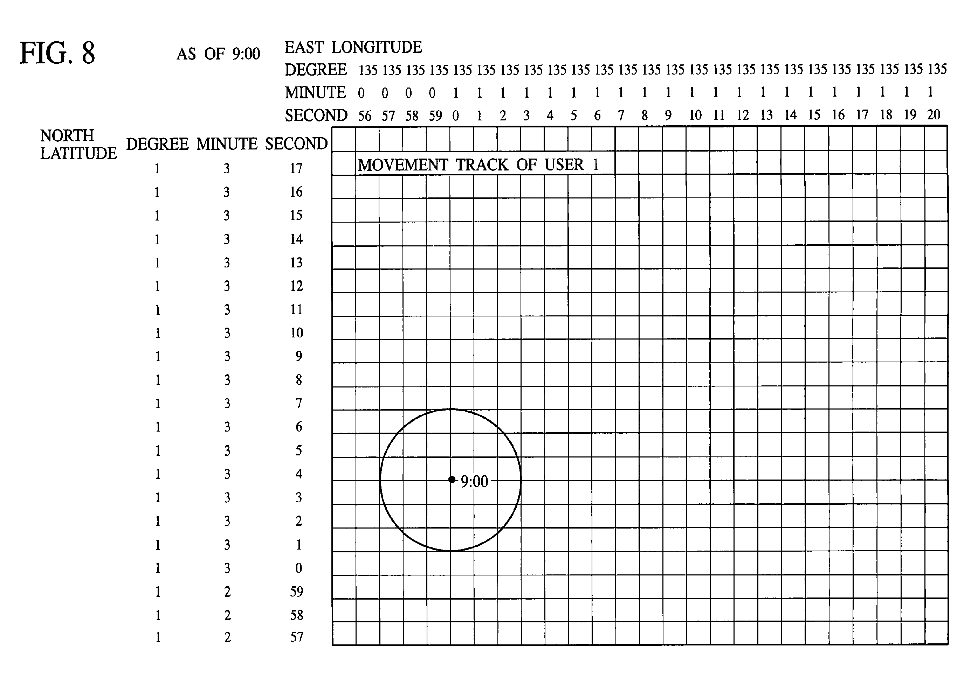

The display position at 9:00 is indicated, as illustrated in FIG. 15B, by "-1", which indicates that the display position could not be given, because as illustrated in FIG. 8, no real positions at times before 9:00 are present, and consequently, no real positions which are apart by 90 m and more are present.

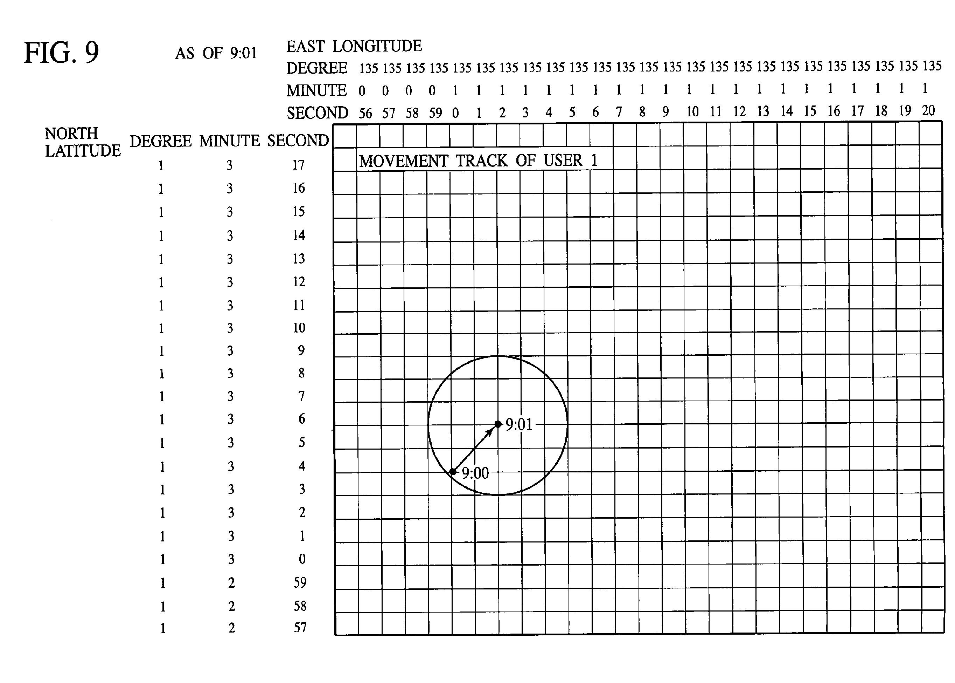

The display position at 9:01 is indicated, as illustrated in FIG. 15B, by "-1", which indicates that no display position was given as illustrated, because, as illustrated in FIG. 9, the real position at 9:00, which is before 9:01, is present, but the real position is not apart from the present real position (the real position at 9:01) by 90 nm and more, and "-1" indicating that no display position was given.

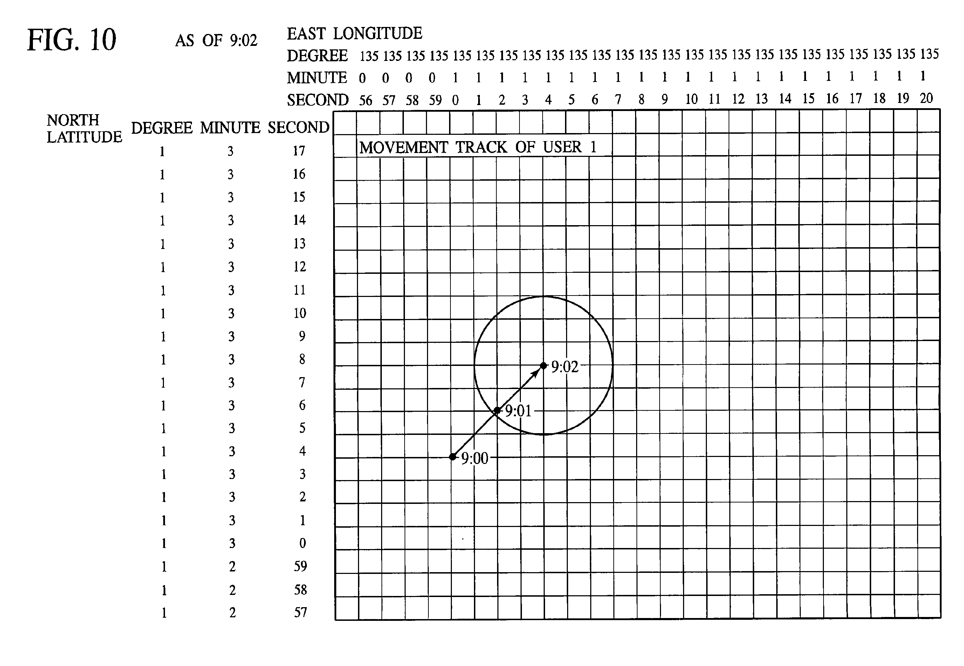

As the display position at 9:02, the real position at 9:00 is recorded as illustrated in FIG. 15B, because, as illustrated in FIG. 10, the real positions at 9:00 and 9:01, which are before 9:02, are present, and the real position at 9:00 is apart from the present real position (the real position at 9:02).

The display positions at 9:03 to 9:11 are given as the display position at 9:02 and are as illustrated in FIG. 15B.

As the display position at 9:12, the real position at 9:09 is recorded as illustrated in FIG. 15B, because that of the real positions at the times before 9:12, which is apart from the present real position (real position at 9:12) by 90 m and more and is most recent is the real position at 9:09.

As the display position at 9:13, the real position at 9:09 is registered as the display position at 9:13 as illustrated in FIG. 15B, because no real position cannot be obtained at 9:13 due to "unreceivable", no present real position (at 9:13) is accordingly present, and the display position given at 9:12 before 9:13 is used as it is.

As the display positions at 9:14 to 9:15, the real position at 9:09 is recorded as illustrated in FIG. 15B, because no real positions can be obtained due to "unreceivable", as the display position at 9:13 cannot be obtained, the display position given at 9:12 before 9:13 is continuously used.

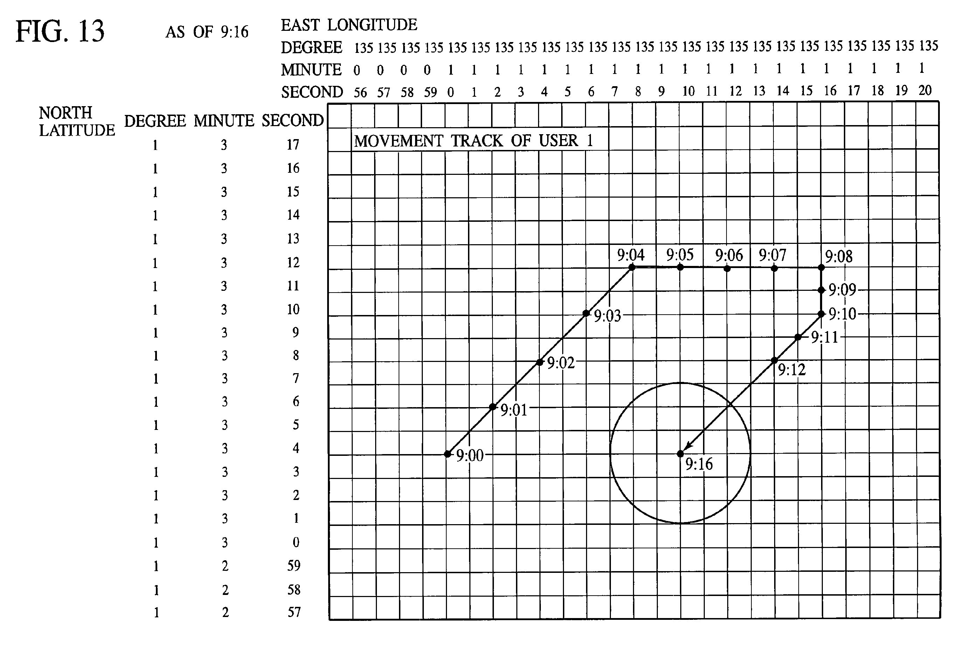

As the display position at 9:16, the real position at 9:12 is recorded as illustrated in FIG. 15B, because, as illustrated in FIG. 13, due to reception recovery, real positions can be obtained, and a real position which is apart from the present real position (real position at 9:16) by 90 m and more and furthermore is most recent is the real position at 9:12.

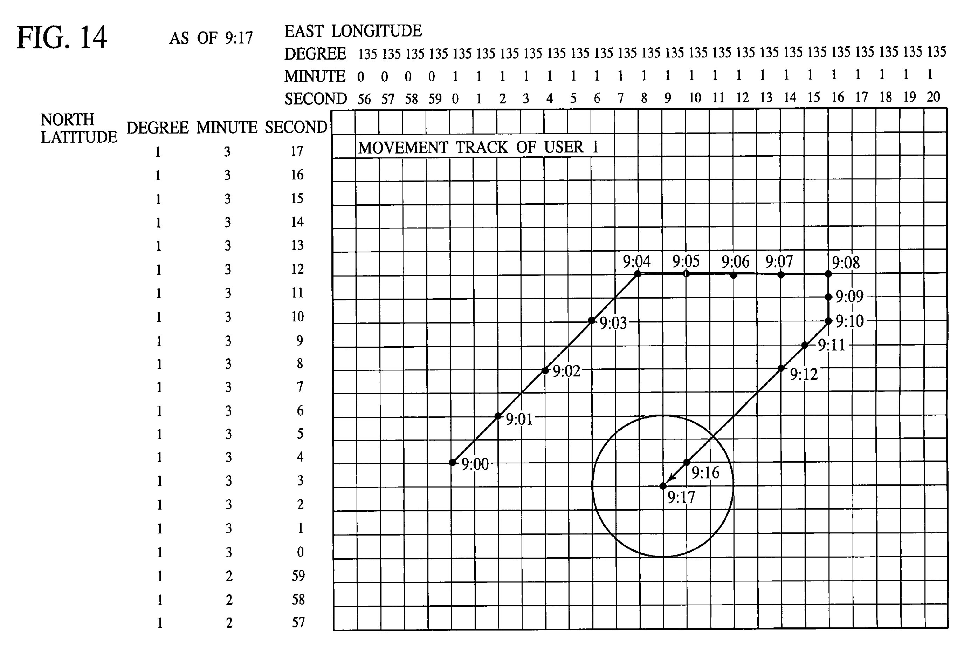

As the display position at 9:17, the real position at 9:12 is recorded as illustrated in FIG. 15B, because, as illustrated in FIG. 14, although real positions can be obtained at 9:16, that of real positions, which is apart from the present real position (real position at 9:17) by 90m and more and furthermore is most recent is still the real position at 9:12.

The display positions at 9:18 and later times can be given in the same way, and as illustrated in FIG. 15B, the display position at 9:18 is the real position at 9:12, the display position at 9:19 is the real position at 9:18, the display position at 9:20 is the real position at 9:19, and the display position at 9:21 is the real position at 9:20.

As described above, according to the third position display processing, a position which is apart from the present real position by a prescribed distance and more, 90 m and more is always a display position, and even when a region where the reception is incapable is present while moving, display positions can be uninterruptedly given. Thus, positions of a movable body can be displayed natural while the privacy of the user is protected.

### [Modified Embodiments]

The present invention is not limited to the above-described embodiment and can cover other various modifications.

For example, in the above-described embodiment, the position information of information processing terminals is obtained by GPS receivers, but the position information may be obtained by position receiving means other than the GPS receivers.

For PHS and mobile phones, for example, position information may be obtained based on information of the presently connected base station.
The position information of information processing terminals having the wireless LAN client function may be obtained based on information of the presently connected access point.

For PHS and mobile phones, for example, it is also possible that a base station detects locations of PHS and mobile phones in an area and informs the server of the information, and the position information of the PHS and mobile phones are computed with reference to the data base of longitudes and latitudes where the base station is installed, which is prepared in the server.

For example, as disclosed in the specification of Japanese Patent Application Unexamined Publication Hei 10-191435, it is also possible that a PHS terminal obtains an identification ID of a CS base station of the maximum field strength, the identification ID is set as a calling sub-address of the ISDN circuit network, the circuit network connecting means of the position information obtaining device side is called, a termination rejection signal from the circuit network connection means is waited for, the circuit network connection means of the called position information obtaining device side retrieves the calling sub-address of the ISDN network, obtains the identification ID of the CS base station if it is present and transmits to the ISDM network a signal rejecting the termination immediately after has received the identification ID, and then, the obtained position coordinate data associated with the identification ID of the CS base station is obtained from the position coordinate data base.
For the information processing terminal having wireless LAN client function, it is possible that an access point detects the presence of an information processing terminal in an area, informs the server of the information, and position information of the information processing terminal is computed with reference to the data base of longitudes and latitudes where the access point is installed, which has been prepared in the server.

It is possible that wireless tags, as of electric waves, infrared radiation, visible light, etc., are set uniformly in a preset area, an information processing terminal obtains ID information from that of the wireless tags near the information processing terminal, the ID information is informed the server, and its position information is computed with reference to the data base of longitudes and latitudes where the wireless tags are installed, which has been prepared in the server.

## Claims

1. A position display system for displaying positions of a plurality of information processing terminals on the screens of the respective information processing terminals, comprising:
position-related information obtaining means for obtaining position-related information related with real positions of the respective information processing terminals;
position-related information transmitting means for transmitting the position-related information to a server;
memory means of the server for storing real positions of the respective information processing terminals, based on the position-related information;
display position generating means for generating as display positions, for the respective information processing terminal, past real positions which satisfy the condition of being before the present time by a prescribed period of time and more, and being apart from present real positions by a prescribed distance and more;
display position obtaining means for obtaining the display position of the respective information processing terminals from the server; and
position display means for displaying the display positions of said plural information processing terminals on the screens of the respective information processing terminals.

2. A position display system for displaying positions of a plurality of information processing terminals on the screens of the respective information processing terminals, comprising:
position-related information obtaining means for obtaining position-related information related with real positions of the respective information processing terminals;
position-related information transmitting means for transmitting the position-related information to a server;
memory means of the server for storing real positions of the respective information processing terminals, based on the position-related information;
display position generating means for generating as positions-to-be displayed, for the respective information processing terminals, past real positions which satisfy the condition of being before the present time by a prescribed period of time and more;
display position obtaining means for obtaining from the server the display positions of the respective information processing terminals; and
position display means for displaying the display positions of the plural information processing terminals on the screens of the respective information processing terminals.

3. A position display system for displaying positions of a plurality of information processing terminals on the screens of the respective information processing terminals, comprising:
position-related information obtaining means for obtaining position-related information related with real positions of the respective information processing terminals;
position-related information transmitting means for transmitting the position-related information to a server;
memory means of the server for storing real positions of the respective information processing terminals, based on the position-related information;
display position generating means for generating as display positions, for the respective information processing terminals, past real positions which satisfy the condition of being apart from the present real positions by a prescribed distance and more;
display position obtaining means for obtaining from the server the display positions of the respective information processing terminals;
position display means for displaying the display positions of said a plurality of information processing terminals on the screens of the respective information processing terminals.

4. The position display system according to claim 1, wherein
the display position generating means generates as a display position that of past real positions satisfying said condition, which is most recent.

5. The position display system according to claim 1, wherein
the display position means generates as a display position that of past real positions satisfying said condition, which is nearest to the present real position.

6. The position display system according to claim 1, wherein
the position displaying means displays on the screen of the respective information processing terminal the present real position of its own information processing terminal and said display positions on the other information processing terminals.

7. A server of a position display system for displaying positions of a plurality of information processing terminals on the screens of the respective information processing terminals, comprising:
memory means for storing real positions of the respective information processing terminals based on position-related information transmitted from the respective information processing terminals; and
display position generation means for generating as display positions, for the respective information processing terminals, past real positions which satisfy the condition of being before the present time by a prescribed period of time and more, and being apart from present real positions by a prescribed distance and more.

8. A server of a position display system for displaying positions of a plurality of information processing terminals on the screens of the respective information processing terminals, comprising:
memory means for storing real positions of the respective information processing terminals based on position-related information transmitted from the respective information processing terminals; and
display position generating means for generating as display positions, for the respective information processing terminals, past real positions which satisfy the condition of being before the present time by a prescribed period time and more.

9. A sever of a position display system for displaying positions of a plurality of information processing terminals on the screens of the respective information processing terminals, comprising:
memory means for storing real positions of the respective information processing terminals based on position-related information transmitted from the respective information processing terminals; and
display position generating means for generating as display positions, for the respective information processing terminals, past real positions which satisfy the condition of being apart from the present real positions by a prescribe distance and more.

10. An information processing terminal of a position display system for displaying positions of a plurality of information processing terminals of the screens of the respective information processing terminals, comprising:
position-related information obtaining means for obtaining position-related information related with their own real positions;
position-related information transmitting means for transmitting to a server;
display position obtaining means for obtaining display positions of the respective information processing terminals from the server; and
position display means for displaying the display positions of said a plurality of information processing terminals on the screens.

11. The information processing terminal according to claim 10, wherein
the position display means display the present real position for its own information processing terminal and said display positions for the other information processing terminals.

12. A computer program for causing a server of a position display system for displaying positions of a plurality of information processing terminals on the screens of the respective information processing terminals to function as:
memory means for storing real positions of the respective information processing terminals based on position-related information transmitted from the respective information processing terminals; and
display position generating means for generating as display positions, for the respective information processing terminals, past real positions which satisfy the condition of being before the present time by a prescribed period of time and more, and being apart from the present real positions by a prescribed distance and more.

13. A computer program for causing a server of a position display system for displaying positions of a plurality of information processing terminals on the screens of the respective information processing terminals to function as:
memory means for storing real positions of the respective information processing terminals based on position-related information transmitted from the respective information processing terminals; and
display position generating means for generating as display positions, for the respective information processing terminals, past real positions which satisfy the condition of being before from the present time by a prescribed period of time and more.

14. A computer program for causing a server of a position display system for displaying positions of a plurality of information processing terminals on the screens of the respective information processing terminals to function as:
memory means for storing real positions of the respective information processing terminals based on position-related information transmitted from the respective information processing terminals; and
display position generating means for generating as display positions, for the respective information terminals, past real positions which satisfy the conditions of being apart from the present real positions by a prescribe distance and more.

15. A computer program for causing an information processing terminal of a position display system for displaying positions of a plurality of information processing terminals on the screens of the respective information processing terminals to function as:
position-related information obtaining means for obtaining position-related information related with their own real positions;
position-related information transmitting means for transmitting the position-related information to a server;
display position obtaining means for obtaining display positions of the respective information processing terminals from the server; and
position display means for displaying the display positions of said a plurality of information processing terminals on the screens.

16. The computer program according to claim 15, wherein
the position display means displays the present real position for its own information processing terminal and said display positions for the other information processing terminals.

17. A storage medium which stores the computer program according to any one of claims 12 to 16 and can be read by computers.
